**Europäisches Patentamt**

**European Patent Office**

**Office européen des brevets**

(11) Veröffentlichungsnummer: **0 474 910 B2**

(12) # NEUE EUROPÄISCHE PATENTSCHRIFT

(45) Veröffentlichungstag der neue Patentschrift:
**28.06.95**

(51) Int. Cl.⁶: **F16G 11/02**, E01F 7/04

(21) Anmeldenummer: **90117708.9**

(22) Anmeldetag: **14.09.90**

---

(54) **Kreuzklemme sowie Drahtseilnetz mit Kreuzklemmen.**

---

(43) Veröffentlichungstag der Anmeldung:
**18.03.92 Patentblatt 92/12**

(45) Bekanntmachung des Hinweises auf die Patenterteilung:
**14.07.93 Patentblatt 93/28**

(45) Bekanntmachung des Hinweises auf die Entsheidung über den Einspruch:
**28.06.95 Patentblatt 95/26**

(84) Benannte Vertragsstaaten:
**AT CH DE ES FR GB IT LI SE**

(56) Entgegenhaltungen:
EP-A- 0 007 607     FR-A- 2 200 655
FR-A- 2 629 492     GB-A- 842 295
US-A- 686 232       US-A- 5 199 673

(73) Patentinhaber: **Brugg Drahtseil AG**
**Wydenstrasse**
**CH-5242 Birr (CH)**

(72) Erfinder: **Bolliger, Reinhold**
**Lerchenweg 6**
**CH-5200 Windisch (CH)**

(74) Vertreter: **Steudtner, Werner, Dipl.-Ing.**
**Lindenhof 5**
**CH-8604 Hegnau bei Zürich (CH)**

Rank Xerox (UK) Business Services
(3.10/3.09/3.3.3)

## Beschreibung

Die Erfindung bezieht sich auf eine Kreuzklemme zum Zusammenklemmen von zwei sich kreuzenden Drahtseilen bzw. Drahtseilabschnitten an der Kreuzungsstelle mit zwei durch Klauen zusammengehaltenen, auf die Drahtseile an der Kreuzungsstelle einen Pressdruck ausübenden Klemmenteilen, die je eine Auflagefläche für je eines der beiden sich kreuzenden Drahtseile aufweisen und von denen mindestens eines mit wenigstens einem Paar von einander gegenüberliegenden Klemmen versehen ist, sowie weiter aufeine mit einer solchen Kreuzklemme hergestellte Verbindung zwischen zwei sich kreuzenden Drahtseilen bzw. Drahtseilabschnitten und ein mit solchen Kreuzklemmen versehenes Drahtseilnetz.

Kreuzklemmen dieser Art sind seit langer Zeit bekannt und werden hauptsächlich als Verbindungselemente zur Verbindung von jeweils zwei sich kreuzenden Drahtseilen an den Seilkreuzungsstellen von Schneenetzen und Steinschlagnetzen verwendet.

Die bekannten Kreuzklemmen dieser Art sind in der Regel aus oberflächenbehandeltem Stahlblech mit einer Blechstärke von 1,0 bis 2,5 mm hergestellt und umfassen als Klemmenteile einen üblicherweise als Klauenteil bezeichneten, im wesentlichen quadratischen, kalottenförmig nach unter ausgewölbten Bodenteil mit vier an den vier Seiten der Quadratform angeordneten, vor Verbindung der Drahtseile durch die Kreuzklemme vertikal nach oben weisenden, einstückig mit dem Bodenteil verbundenen Laschen und einen üblicherweise als Deckel bezeichneten, ebenfalls im wesentlichen quadratischen, kalottenförmig nach oben ausgewölbten Deckelteil, und zur Verbindung der Drahtseile mittels der Kreuzklemme wird zunächst eines der beiden sich kreuzenden Drahtseile in zwei sich diagonal gegenüberliegende Zwischenräume zwischen jeweils zwei Laschen des Bodenteils und danach das andere der beiden sich kreuzenden Drehtseile in die anderen beiden sich diagonal gegenüberliegenden Zwischenräume zwischen jeweils zwei Laschen des Bodenteils eingelegt, und danach wird auf die beiden sich kreuzenden Drahtseile der Deckelteil der Kreuzklemme mit den vier Ecken seiner Quadratform in den vier Zwischenräumen zwischen den vier Laschen des Bodenteils aufgelegt und anschliessend Bodenteil und Deckelteil der Kreuzklemme und damit auch die beiden Drahtseile an ihrer Kreuzungsstelle zusammengepresst und die vier Laschen zu den Deckelteil übergreifenden Klauen umgebogen.

Diese bekannten Kreuzklemmen haben sich im allgemeinen insbesondere bei Schneenetzen gut bewährt, aber bei der Verwendung dieser Kreuzklemmen für Steinschlagnetze hat sich herausgestellt, dass die Kreuzklemmen extremen Belastungen, wie sie beim Aufschlag von sehr schweren Steinen auf Steinschlagnetze auftreten, häufig nichtstandhalten sondern dann aufspringen, womit sich die Verbindungen der Drahtseile an ihren Kreuzungsstellen lösen und sich die Maschenweite des Steinschlagnetzes an der Aufschlagstelle eines sehr schweren Steines im Moment des Aufschlages schlagartig so weit vergrössert, dass der Stein die vergrösserte Masche passieren kann und das Steinschlagnetz somit bei sehr schweren Steinen seine Funktion nicht mehr erfüllt und demgemäss keinen Schutz mehr bietet sondern im Gegenteil wegen des Passierenlassens gerade der sehr schweren Steine eine potentielle Gefahr für alle, die sich auf die Schutzwirkung des Steinschlagnetzes verlassen, darstellt.

Man ist daher bei Steinschlagnetzen, bei denen aufgrund der vorgesehenen Position mit extremen Belastungen zu rechnen ist, dazu übergegangen, zur Verbindung der sich kreuzenden Drahtseile an den Kreuzungsstellen U-förmig gebogene Bolzen mit Gewinde an beiden Enden und einer mit zwei Löchern für die Schenkel des U-förmigen Bolzens versehenen, auf die Bolzenschenkel aufgeschobenen und mit Muttern festgezogenen Klemmbacke zu verwenden, die in der Regel als Formgussteil ausgebildet und auf der den Drahtseilen zugewandten Seite mit Vertiefungen zur Fixierung der Lage der sich kreuzenden Drahtseile versehen ist. Verbindungen dieser Art von sich kreuzenden Drahtseilen können sich zwar praktisch nur bei Bruch des die Klemmbacke bildenden Formgussteils lösen und sind daher wesentlich sicherer als Verbindungen mit den bekannten Kreuzklemmen, aber der technische Aufwand für solche Verbindungen mit U-Bolzen beträgt ein Vielfaches des technischen Aufwandes für Herstellung und Anbringung einer Kreuzklemme, besonders auch deswegen, weil solche Verbindungen mit U-Bolzen von Hand montiert werden müssen und die Anbringung einer solchen Verbindung daher äusserst arbeitsaufwendig ist, während demgegenüber die Anbringung von Kreuzklemmen in aller Regel maschinell erfolgt.

Der Erfindung lag nun die Aufgabe zugrunde, eine Kreuzklemme der eingangs genannten Art zu schaffen, die einerseits eine wesentlich grössere Sicherheit gegen Aufspringen als die bekannten Kreuzklemmen der eingangs genannten Art bietet und andererseits mit einem wesentlich geringeren technischen Aufwand als die genannten Verbindungen von sich kreuzenden Drahtseilen mit U-förmigem Bolzen und Klemmbacke verbunden ist.

Erfindungsgemäss wird das bei einer Kreuzklemme der eingangs genannten Art dadurch erreicht, dass für jede zu einem der beiden Klemmenteile gehörende Klaue an dem anderen Klemmenteil ein Schlitz zum Hindurchführen der Klaue vorgesehen ist und das über den Schlitz hinausragende Endstück der durch den Schlitz hindurchgeführten Klaue abgebogen ist.

Hauptvorteil der vorliegenden Kreuzklemme ist, dass durch die Hindurchführung der Klauen durch Schlitze eine Ausweichbewegung der Klauen in Oeffnungsrichtung unter extremer Belastung, die in der Regel die Ursache für das Aufspringen der bekannten Kreuzklemmen unter extremer Belastung war, ausgeschlossen ist. Dadurch ergibt sich als weiterer Vorteil, dass die Klauen unter extremer Belastung hauptsächlich auf Zug in Längsrichtung der Klauen bzw. Laschen, durch deren Umbiegen die Klauen gebildet werden, beansprucht werden und Zugbelastungen, die zum Abreissen der Klauen führen könnten, auch unter extremsten Belastungen beim Aufschlag ausserordentlich schwerer Steine kaum auftreten können.

Vorteilhaftkönnen bei der vorliegenden Kreuzklemme zwei Paare von einander gegenüberliegenden Klauen vorgesehen sein, die vorzugsweise um 90° gegeneinander versetzt angeordnet sind. Bei einer bevorzugten Ausbildungsform der vorliegenden Kreuzklemme ist dabei eines der beiden Klemmenteile mit den beiden Paaren von einander gegenüberliegenden Klauen und das andere Klemmenteil mit den für die beiden Klauenpaare vorgesehenen vier Schlitzen versehen. Diese bevorzugte Ausbildungsform erfordert zwar unterschiedliche Klemmenteile, hat aber unter der Voraussetzung, dass das mit den Schlitzen versehene Klemmenteil auf der Bergseite und das mit den Klauen versehene Klemmenteil auf der Talseite des Drahtseilnetzes angeordnet ist, den Vorteil der von allen möglichen Ausbildungsformen höchsten Belastbarkeit. Bei einer anderen sehr vorteilhaften Ausbildungsform der vorliegenden Kreuzklemme mit zwei Paaren von einander gegenüberliegenden Klauen ist jedes der beiden Klemmenteile mit je einem Paar von einander gegenüberliegenden Klauen und zwei Schlitzen für das Klauenpaar des jeweils anderen Klemmenteiles versehen. Diese letztere Ausbildungsform hat den Vorteil von untereinander gleichen Klemmenteilen und den daraus resultierenden Vorteil, dass nicht zwei Werkzeuge zur Herstellung von zwei unterschiedlichen Klemmenteilen sondern nur ein Werkzeug zur Herstellung der beiden untereinander gleichen Klemmenteile benötigt wird und daher die Herstellungskosten und ausserdem auch die Lagerhaltungskosten um einiges geringer als bei zwei unterschiedlichen Klemmenteilen sind, aber die Belastbarkeit ist bei dieser Ausbildungsform ein wenig geringer als bei der zuvor genannten bevorzugten Ausbildungsform, beträgt aber natürlich immer noch ein Vielfaches der Belastbarkeit der bekannten Kreuzklemmen. Welche dieser beiden Ausbildungsformen vorteilhafter ist, hängt somit davon ab, ob die höchste Belastbarkeit der genannten bevorzugten Ausbildungsform für den vorgesehenen Anwendungsfall erforderlich ist oder auch die etwas geringere Belastbarkeit der letztgenannten Ausbildungsform ausreichend wäre. Im ersteren Fall ist natürlich die genannte bevorzugte Ausbildungsform vorteilhafter, im letzteren Fall hingegen wegen der geringeren Herstellungskosten die letztgenannte Ausbildungsform.

Bei einer besonders einfachen Ausbildungsform der vorliegenden Kreuzklemme schliesslich ist nur eines der beiden Klemmenteile mit einem Paar von einander gegenüberliegenden Klauen und das andere Klemmenteil mit den für dieses eine Klauenpaar vorgesehenen zwei Schlitzen versehen. Bei dieser Ausbildungsform sind die beiden Klemmenteile zwar ebenfalls unterschiedlich ausgebildet und erfordern daher zwei unterschiedliche Werkzeuge zu ihrer Herstellung, aber diese Werkzeuge sind natürlich weniger kompliziert und daher in ihrer Herstellung billiger als bei der genannten bevorzugten Ausbildungsform und haben ausserdem höhere Standzeiten, so dass die Herstellungskosten der Kreuzklemme bei dieser einfachen Ausbildungsform wesentlich unter den Herstellungskosten bei der genannten bevorzugten Ausbildungsform und meist sogar noch etwas niedriger als bei der obengenannten anderen vorteilhaften Ausbildungsform liegen. Die Belastbarkeit liegt bei dieser einfachen Ausbildungsform allerdings deutlich unter derjenigen der genannten bevorzugten Ausbildungsform, aber trotzdem hat auch diese einfache Ausbildungsform neben ihren billigen unkomplizierten Werkzeugen noch den Vorteil einer Belastbarkeit, die ein mehrfaches der Belastbarkeit der bekannten Kreuzklemmen beträgt.

Zweckmässig sind bei der vorliegenden Kreuzklemme die Klauen von mit ihren Endstücken umgebogenen Laschen aus Blech gebildet, die mit dem zugehörigen Klemmenteil vorzugsweise einstückig verbunden sind und deren über die Schlitze hinausragenden Endstücke vorzugsweise halbkreisförmig abgerundet sind.

Mit besonderem Vorteil kann die vorliegende Kreuzklemme so weitergebildet sein, dass die Schlitze an ihren Schlitzenden im Querschnitt vorzugsweise halbkreisförmig abgerundet sind und eine über der Bleckstärke $s$ des die Laschen bildenden Bleches liegende Oeffnungsweite $w$ sowie eine über der Laschenbreite $b$ liegende Schlitzlange $l$ aufweisen, die zur Fixierung der Position der Laschen bzw. Klauen innerhalb der Schlitze mit $l \approx b + w - \sqrt{w^2 - s^2}$ vorzugsweise nahezu gleich der Summe der Laschenbreite $b$ und der Schlitzöffnungsweite $w$ abzüglich $\sqrt{w^2 - s^2}$ und mit $l \approx b + 0,414\ s$ zweckmässig nahezu gleich der Summe der Laschenbreite $b$ und des 0,414-fachen der Blechstärke s des die Laschen bildenden Bleches ist. Eine solche Weiterbildung hat den Vorteil, dass die Klauen innerhalb der Schlitze fixiert sind, obwohl die Oeffnungsweite der Schlitze zur guten Einführbarkeit der Klauen bzw. Laschen in dieselben um einiges grösser als die Blechstärke des die Klauen bzw. Laschen bildenden Bleches ist, und dass diese Fixierung auch nicht das geringfügigste Ausweichen der Klauen bei extremer Belastung zulässt und damit garantiert, dass die Klauen auch unter extremer Belastung im wesentlichen nur auf Zug belastet werden.

Die Erfindung betrifft weiter eine Verbindung zwischen zwei sich kreuzenden Drahtseilen bzw. Drahtseilabschnitten mit der vorliegenden Kreuzklemme, deren Vorteil die schon erörterte wesentlich höhere Belastbarkeit als bei den bekannten Kreuzklemmen ist.

Ferner betrifft die Erfindung noch ein Drahtseilnetz, insbesondere Steinschlagnetz, bei dem vorzugsweise alle, zumindest aber ein Teil der Kreuzungen von zwei Drahtseilen bzw. Drahtseilabschnitten des Drahtseilnetzes mit je einer erfindungsgemässen Kreuzklemme versehen ist. Der Vorteil solcher Drahtseilnetze gegenüber den bekannten Drahtseilnetzen mit bekannten Kreuzklemmen ist ihre Anwendbarkeit insbesondere als Steinschlagnetz auch unter den schwierigsten Anwendungsbedingungen.

Anhand der nachstehenden Figuren ist die Erfindung im folgenden an einigen Ausführungsbeispielen näher erläutert. Es zeigen

Fig. 1    ein Ausführungsbeispiel einer zwei sich kreuzende Drahtseile verbindenden Kreuzklemme nach der Erfindung mit unterschiedlichen Klemmenteilen in Draufsicht

Fig. 2    den in Fig. 1 oberen Klemmenteil der in Fig. 1 gezeigten Kreuzklemme in Draufsicht

Fig. 3    den in Fig. 1 unteren Klemmenteil der in Fig. 1 gezeigten Kreuzklemme in Draufsicht

Fig. 4    den in Fig. 3 in Draufsicht gezeigten unteren Klemmenteil der in Fig. 1 gezeigten Kreuzklemme in Seitenansicht mit in Fig. 3 horizontaler Blickrichtung

Fig. 5    ein Ausführungsbeispiel einer zwei sich kreuzende Drahtseile verbindenden Kreuzklemme nach der Erfindung mit untereinander gleichen Klemmenteilen in Draufsicht

Fig. 6    den in Fig. 5 oberen Klemmenteil der in Fig. 5 gezeigten Kreuzklemme in Draufsicht

Fig. 7    den in Fig. 5 unteren Klemmenteil der in Fig. 5 gezeigten Kreuzklemme in Draufsicht

Fig. 8    den in Fig. 7 in Draufsicht gezeigten unteren Klemmenteil der in Fig. 5 gezeigten Kreuzklemme in Seitenansicht mit in Fig. 7 horizontaler Blickrichtung

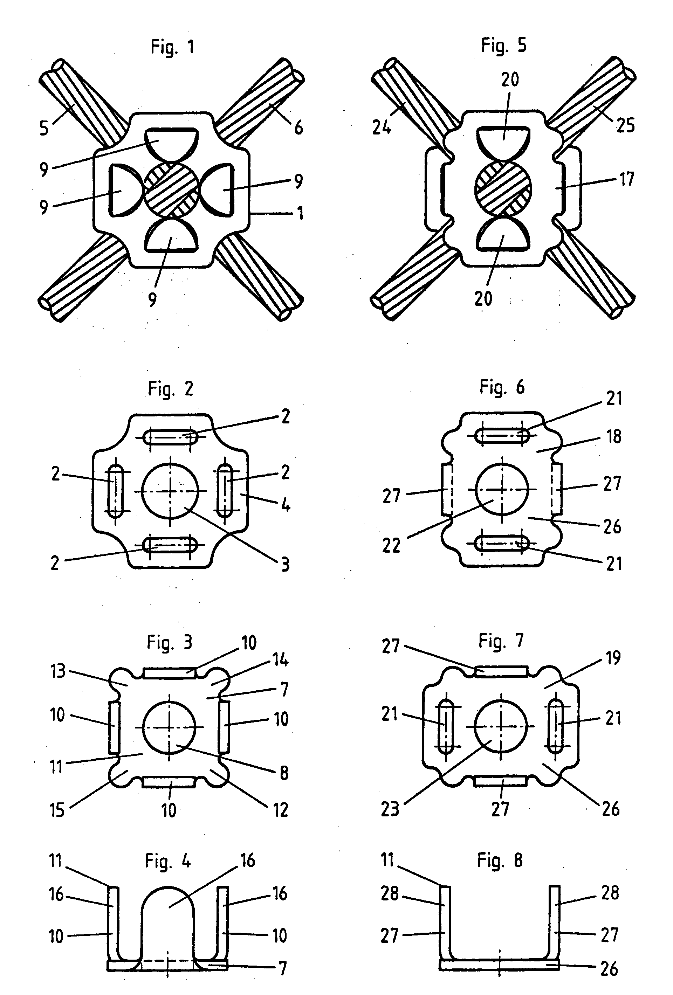

Die in den Figuren 1 bis 4 gezeigte bevorzugte Ausbildungsform der vorliegenden Kreuzklemme 1 umfasst den in Fig. 2 gezeigten, mit vier Schlitzen 2 und einer zentralen kreisrunden Ausnehmung 3 versehenen, den Deckelteil bildenden oberen Klemmenteil 4 und den in den Figuren 3 und 4 im Zustand vor der Verbindung der beiden sich kreuzenden Drahtseile 5 und 6 gezeigten, einen Bodenteil 7 mit einer zentralen kreisrunden Ausnehmung 8 und vier einstückig mit dem Bodenteil 7 verbundenen, in die Schlitze 2 passenden, zur Bildung der Klauen 9 bei der Verbindung der beiden Drahtseile 5 und 6 vorgesehenen Laschen 10 aufweisenden, den Klauenteil bildenden unteren Klemmenteil 11.

Die beiden Klemmenteile 4 und 11 sind aus Stahlblech mit einer Blechstärke von 2,5 mm ausgestanzt und bestehen aus einem für Kaltverformung ohne Rissbildung geeigneten, eine hohe Festigkeit, hohe Streckgrenze und grosse Bruchdehnung aufweisenden Stahl wie z.B. St3K40 oder bei höchsten Ansprüchen z.B. St 67. Bei dem unteren Klemmenteil 11 werden nach dem Stanzvorgang noch die Laschen 10 rechtwinklig zum Bodenteil 7 abgebogen. Nach dem Stanzen und dem Abbiegen der Laschen 10 bei dem unteren Klemmenteil 11 werden die Klemmenteile 4 und 11 noch mit schon bei den bekannten Kreuzklemmen angewandten Oberflächenbehandlungsverfahren verzinkt und chromatiert.

Zur Herstellung der Verbindung zwischen den beiden sich kreuzenden Drahtseilen 5 und 6 mittels der Kreuzklemme 1 wird zunächst das Drahtseil 5 in die Zwischenräume 12 und 13 und danach das Drahtseil 6 in die Zwischenräume 14 und 15 zwischen den Laschen 10 des unteren Klemmenteils 11 eingelegt, und dann wird der obere Klemmenteil 4 auf die in die Schlitze 2 desselben passenden Laschen 10 des unteren Klemmenteils 11 unter einem so starken Druck aufgeschoben, dass die Kanten der Laschen 10 sich ganz geringfügig auf eine unter 50 $\mu$m liegende und im Mittel etwa 25 $\mu$m betragende Tiefe in die halbkreisförmig abgerundeten Schlitzenden der eine Oeffnungsweite von w = 3,5 mm und eine über der Laschenbreite b = 13 mm liegende Schlitzlänge l = 14 mm aufweisenden Schlitze 2 eindrücken und dadurch die Position der Laschen 10 innerhalb der Schlitze 2 und damit die Lage des oberen Klemmenteils 4 relativ zum unteren Klemmenteil 11 exakt fixiert wird. Mit dem sich gleichzeitig mit diesem Eindrücken der Kanten der Laschen 10 in die Schlitzenden der Schlitze 2 ergebenden Fortschreiten des Zusammenschiebens des oberen und unteren Klemmenteils 4 und 11 wird dann auf die beiden Drahtseile 5 und 6 an ihrer Kreuzungsstelle ein sich mit diesem Zusammenschieben laufend erhöhender Druck ausgeübt, der bis auf etwa 210 bar gesteigert wird. Infolge des hohen Druckes weichen dabei die Drahtseile 5 und 6 an der Kreuzungsstelle in die für diesen Zweck vorgesehenen Ausnehmungen 8 und 3 aus, die an die Stelle der für den gleichen Zweck bei den bekannten Kreuzklemmen vorgesehenen, oben erwähnten kalottenförmigen Auswölbungen treten. Nach diesem Zusammenpressen der Drahtseile 5 und 6 sowie des oberen und unteren Klemmenteils 4 und 11 werden dann die über die Schlitze 2 hinausragenden Endstücke 16 der durch die Schlitze 2 hindurchgeführten Laschen 10 wie in Fig. 1 gezeigt umgebogen und dadurch aus den Laschen 10 die Klauen 9 gebildet. Das Umbiegen dieser Endstücke 16 der Laschen 10 kann dabei schon während des Zusammenpressens der Drahtseile 5 und 6 sowie des oberen und unteren Klemmenteils 4 und 11 eingeleitet, endgültig aber erst nach oder frühestens mit dem Ende dieses Zu-sammenpressens beendet werden. Die mit diesem Umbiegen fertiggestellte, die Drahtseile 5 und 6 an ihrer Kreuzungsstelle verbindende Kreuzklemme 1 ist in Draufsicht auf den oberen Klemmenteil 4 in Fig. 1 dargestellt.

Die Untersuchung der Belastbarkeit der in Fig. 1 dargestellten Kreuzklemme ergab, dass die Oeffnungskraft für diese Kreuzklemme mit ca. 12 kN etwa viermal so hoch wie die Oeffnungskraft für die eingangs erörterten bekannten Kreuzklemmen ist und sich damit eine Belastbarkeit der Kreuzklemme 1 in Fig. 1 ergibt, die weit über den im Extremfalle auftretenden maximalen Belastungen liegt. Auch die sogenannte Verschiebekraft, bei der eine Verschiebung des Drahtseils 5 und/oder 6 relativ zur Kreuzklemme 1 beginnt, konnte im Vergleich zu den eingangs erörterten bekannten Kreuzklemmen um 10 bis 20% erhöhtwerden, wozu allerdings zu bemerken ist, dass schon die eingangs erörterten bekannten Kreuzklemmen den Anforderungen hinsichtlich der Verschiebungskraft genügten und die mit der Kreuzklemme 1 erreichte Erhöhung der Verschiebekraft daher nur ein nicht von vornherein angestrebter vorteilhafter Nebeneffekt der erreichten wesentlichen Erhöhung der Oeffnungskraft ist.

Die in den Figuren 5 bis 8 gezeigte andere sehr vorteilhafte Ausbildungsform der vorliegenden Kleuzklemme 17 unterscheidet sich von der in den Figuren 1 bis 4 gezeigten bevorzugten Ausbildungsform der vorliegenden Kreuzklemme 1 im wesentlichen nur dadurch, dass bei der Kreuzklemme 17 jedes der beiden Klemmenteile 18 und 19 mit je einem Paar von einander gegenüberliegenden Klauen 20 und zwei Schlitzen 21 für das Klauenpaar des jeweils anderen Klemmenteiles versehen ist. Auch bei der Kreuzklemme 17 sind für den gleichen Zweck wie bei der Kreuzklemme 1 beide Klemmenteile 18 und 19 mit je einer zentralen Ausnehmung 22 und 23 versehen, und jedes der beiden Klemmenteile 18 und 19 weist in dem in den Figuren 6 bis 8 dargestellten Zustand vor der Verbindung der beiden sich kreuzenden Drahtseile 24 und 25 zwei einstückig mit dem Basisteil 26 verbundene, in die Schlitze 21 passende, zur Bildung der Klauen 20 bei der Verbindung der beiden Drahtseile 24 und 25 vorgesehene Laschen 27 auf.

Die beiden Klemmenteile 18 und 19 der Kreuzklemme 17 bestehen aus dem gleichen Blech mit gleicher Blechstärke wie die Klemmenteile 4 und 11 der Kreuzklemme 1 und werden nach dem Stanzvorgang und dem Abbiegen der Laschen 27 rechtwinklig zum Basisteil 26 in gleicher Weise wie die Klemmenteile 4 und 11 oberflächenbehandelt.

Zur Herstellung der Verbindung zwischen den beiden sich kreuzenden Drahtseilen 24 und 25 mittels der Kreuzklemme 17 werden hier zunächst einmal die beiden Drahtseile 24 und 25 fixiert, und dann werden die beiden Klemmenteile 18 und 19 um 90° gegeneinander versetzt von beiden Seiten über die Kreuzungsstelle der Drahtseile 24 und 25 geschoben und die Laschen 27 der beiden Klemmenteile 18 und 19 in die Schlitze 21 des jeweils anderen Klemmenteils eingeführt, und der anschliessende Pressvorgang sowie das Umbiegen der Endstücke 28 der Laschen 27 zur Bildung der Klauen 20 erfolgt dann wieder in gleicher Weise wie bei der Kreuzklemme 1.

Die Belastbarkeit der in Fig. 5 gezeigten Kreuzklemme 17 ist hinsichtlich der Oeffnungskraft etwa 10 bis 20% niedriger als bei der Kreuzklemme 1 in Fig. 1, was darauf zurückzuführen ist, dass von den vier Klauen 20 der Kreuzklemme 17 nur zwei auf der Bergseite eines Steinschlagnetzes und die anderen beiden auf der Talseite desselben liegen, und hinsichtlich der Verschiebekraft ist die Belastbarkeit der in Fig. 5 gezeigten Kreuzklemme 17 etwa gleichgross wie die der Kreuzklemme 1 in Fig. 1.

**Patentansprüche**

1. Kreuzklemme (1;17) zum Zusammenklemmen von zwei sich kreuzenden Drahtseilen (5,6;24,25) bzw. Drahtseilabschnitten an der Kreuzungsstelle mit zwei durch Klauen (9;20) zusammengehaltenen, auf die Drahtseile an der Kreuzungsstelle einen Pressdruck ausübenden Klemmenteilen (4,11;18,19), die je eine Auflagefläche für je eines der beiden sich kreuzenden Drahtseile aufweisen und von denen mindestens eines mit wenigstens einem Paar von einander gegenüberliegenden Klauen (9;20) versehen ist, dadurch gekennzeichnet, dass für jede zu einem (11;18,19) der beiden Klemmenteile (4,11;18,19) gehörende Klaue (9;20) an dem anderen Klemmenteil (4;18,19) ein außenherum geschlossener Schlitz (2;21) zum Hindurchführen der Klaue (9;20) vorgesehen ist und das über den Schlitz (2;21) hinausragende Endstück (16;28) der durch den Schlitz (2,21) hindurchgeführten Klaue (9;20) abgebogen ist.

2. Kreuzklemme nach Anspruch 1, dadurch gekennzeichnet, dass zwei Paare von einander gegenüberliegenden Klauen (9;20) vorgesehen sind, die vorzugsweise um 90° gegeneinander versetzt angeordnet sind.

3. Kreuzklemme nach Anspruch 2, dadurch gekennzeichnet, dass eines (11) der beiden Klemmenteile (4,11) mit den beiden Paaren von einander gegenüberliegenden Klauen (9) und das andere Klemmenteil (4) mit den für die beiden Klauenpaare vorgesehenen vier Schlitzen (2) versehen ist.

4. Kreuzklemme nach Anspruch 2, dadurch gekennzeichnet, dass jedes der beiden Klemmenteile (18,19) mit je einem Paar von einander gegenüberliegenden Klauen (20) und zwei Schlitzen (21) für das Klauenpaar des jeweils anderen Klemmenteiles (18,19) versehen ist.

5. Kreuzklemme nach Anspruch 1, dadurch gekennzeichnet, dass eines der beiden Klemmenteile mit einem Paar von einander gegenüberliegenden Klauen und das andere Klemmenteil mit den für dieses eine Klauenpaar vorgesehenen zwei Schlitzen versehen ist.

6. Kreuzklemme nach einem der Ansprüche 1 bis 5, dadurch gekennzeichnet, dass die Klauen (9;20) von mit ihren Endstücken (16;28) umgebogenen Laschen (10;27) aus Blech gebildet sind, die mit dem zugehörigen Klemmenteil (11;18,19) vorzugsweise einstückig verbunden sind und deren über die Schlitze (2;21) hinausragende Endstücke (16;28) vorzugsweise halbkreisförmig abgerundet sind.

7. Kreuzklemme nach Anspruch 6, dadurch gekennzeichnet, dass die Schlitze (2;21) an ihren Schlitzenden im Querschnitt vorzugsweise halbkreisförmig abgerundet sind und eine über der Blechstärke s des die Laschen (10;27) bildenden Bleches liegende Oeffnungsweite w sowie eine über der Laschenbreite b liegende Schlitzlänge l aufweisen, die zur Fixierung der Position der Laschen (10;21) bzw. Klauen (9;20) innerhalb der Schlitze (2;21) mit l ≈ b +

$w - \sqrt{w^2 - s^2}$ vorzugsweise nahezu gleich der Summe der Laschenbreite b und der Schlitzöffnungsweite w abzüglich $\sqrt{w^2 - s^2}$ und mit l ≈ b + 0,414 s zweckmässig nahezu gleich der Summe der Laschenbreite b und des 0,414-fachen der Blechstärke s des die Laschen (10;27) bildenden Bleches ist.

8. Verbindung zwischen zwei sich kreuzenden Drahtseilen (5,6;24,25) bzw. Drahtseilabschnitten mit einer Kreuzklemme (1;1)) nach einem der Ansprüche 1 bis 7.

9. Drahtseilnetz, insbesondere Steinschlagnetz, dadurch gekennzeichnet, dass mindestens ein Teil der Kreuzungen von jeweils zwei Drahtseilen (5,6;24,25) bzw. Drahtseilabschnitten des Drahtseilnetzes mit je einer Kreuzklemme (1;17) nach einem der Ansprüche 1 bis 7 versehen ist.

## Claims

1. Cross-type clamp (1;17) for clamping together two crossed wire cables (5,6;24,25) or wire cable sections at the point of crossing by means of two clamp parts (4,11;18,19) which are held together by claws (9;20) and exert a pressing force on the wire cables at the point of crossing and each have a bearing surface for a respective one of the two crossed wire cables, and whereof at least one is provided with at least one pair of mutually opposing claws (9;20), characterized in that, for each claw (9;20) belonging to one (11; 18,19) of the two clamp parts (4,11;18,19), there is provided on the other clamp part (4;18,19) a slot (2;21) closed round about for guiding the claw (9;20) through, and the end piece (16;28) of the claw (9;20) guided through the slot (2;21) and projecting beyond the slot (2;21) is bent back.

2. Cross-type clamp according to Claim 1, characterized in that two pairs of mutually opposing claws (9; 20) are provided which are preferably arranged offset by 90° with respect to one another.

3. Cross-type clamp according to Claim 2, characterized in that one (11) of the two clamp parts(4, 11) is provided with the two pairs of mutually opposing claws (9) and the other clamp part (4) is provided with the four slots (2) provided for the two claw pairs.

4. Cross-type clamp according to Claim 2, characterized in that each of the two clamp parts (18, 19) is provided with a respective pair of mutually opposing claws (20) and two slots (21) for the claw pair of the respectively other clamp part (18, 19).

5. Cross-type clamp according to Claim 1, characterized in that one of the two clamp parts is provided with a pair of mutually opposing claws, and the other clamp part is provided with two slots provided for this one claw pair.

6. Cross-type clamp according to one of Claims 1 to 5, characterized in that the claws (9; 20) are formed from tabs (10; 27) of sheet metal which have their end pieces (16; 28) bent around and which are preferably connected in one piece to the associated clamp part (11; 18, 19); and whereof the end pieces (16; 28) projecting beyond the slots (2; 21) are preferably rounded off in a semi-circle.

7. Cross-type damp according to Claim 6, characterized in that the slots (2; 21) are rounded off at their slot ends preferably in a semi-circle in cross-section, and have an opening width w above the sheet thickness s of the metal sheet forming the tabs (10; 27) and a slot length 1 which is above the tab breadth b and which, for fixing the position of the tabs (10; 21) or claws (9; 20) within the slots (2; 21), where $1 \approx b + w - \sqrt{w^2 - s^2}$, is preferably almost equal to the sum of the tab breadth b and the slot opening width w less $\sqrt{w^2 - s^2}$, and where $1 \approx b + 0.414\ s$, is advantageously almost equal to the sum of the tab breadth b and 0.414 times the sheet thickness s of the metal sheet forming the tabs (10; 27).

8. Connection between two crossed wire cables (5, 6; 24, 25) or wire cable sections with a cross-type clamp (1; 1)) according to one of Claims 1 to 7.

9. Wire cable net, in particular rockfall net, characterized in that at least some of the crossings of in each case two wire cables (5, 6; 24, 25) or wire cable sections of the wire cable net are each provided with a cross-type clamp (1; 17) according to one of Claims 1 to 7.

## Revendications

1. Serre-fil en croix (1;17) pour le serrage de deux câbles métalliques (5,6;24,25) ou tronçons de câble métallique qui se croisent au point de croisement avec deux pièces de serrage (4,11;18,19) maintenues ensemble par des griffes (9;20), exerçant une pression sur les câbles métalliques au point de croisement, et qui présentent chacune une surface d'appui pour l'un des deux câbles métalliques, respectivement, qui se croisent et dont au mois une est pourvue d'au moins une paire de griffes (9;20) opposées l'une à l'autre, caractérisé en ce qu'il est prévu pour chaque griffe (9;20) faisant partie de l'une (11;18,19) des deux pièces de serrage (4,11;18,19) à l'autre pièce de serrage (4;18,19) une fente (2;21) close tout autour pour le passage de la griffe (9;20) et en ce que la pièce d'extrémité (16;28) faisant saillie au-delà de la fente (2;21) de la griffe (9;20) passée à travers la fente (2;21) est repliée.

2. Serre-fil en croix selon la revendication 1, caractérisé en ce que sont prévues deux paires de griffes (9;20) opposées l'une à l'autre qui sont disposées, de préférence, de façon décalée de 90° l'une par rapport à l'autre.

3. Serre-fil en croix selon la revendication 2, caractérisé en ce que l'une (11) des deux pièces de serrage (4,11) est pourvue des deux paires de griffes (9) opposées l'une à l'autre, et que l'autre pièce de serrage (4) est pourvue des quatre fentes (2) prévues pour les deux paires de griffes.

4. Serre-fil en croix selon la revendication 2, caractérisé en ce que chacune des deux pièces de serrage (18,19) est pourvue, respectivement, d'une paire de griffes opposées l'une à l'autre (20) et de deux fentes (21) pour la paire de griffes de l'autre pièce de serrage (18,19) respectivement.

5. Serre-fil en croix selon la revendication 1, caractérisé en ce que l'une des deux pièces de serrage est pourvue d'une paire de griffes opposées l'une à l'autre et que l'autre pièce de serrage est pourvue des deux fentes prévues pour cette paire de griffes.

6. Serre-fil en croix selon l'une des revendications 1 à 5, caractérisé en ce les griffes (9;23) sont réalisées en tôle à partir de languettes (10;27), dont les pièces d'extrémité (16;28) sont recourbées et qui sont venues de matière de préférence avec la pièce de serrage associée (11;18,19) et dont les pièces extrêmes (16;28) faisant saillie au-delà des fentes (2;21) sont arrondies de préférence en demi-cercles.

7. Serre-fil en croix selon la revendication 6, caractérisé en ce que les fentes (2;21) sont, de préférence, arrondies en demi-cercles à leurs extrémités de fente, en section transversale, et présentent une largeur d'ouverture w supérieure à l'épaisseur de tôle s de la tôle constituant les languettes (10;27) ainsi qu'une longueur de fente l supérieure à la largeur de languette b et qui, pour la fixation de la position des languettes (10;21) et des griffes (9;20), respectivement, à l'intérieur des fentes (2;21) avec 1≈b + w - $\sqrt{w^2 - s^2}$' est presque indentique à la somme de la largeur de languette b plus la largeur d'ouverture de fente w moins $\sqrt{w^2 - s^2}$' et avec 1≈b + 0,414 s est de façon utile, presque égale à la somme de la largeur de languette b plus 0,414 fois l'épaisseur de tôle s de la tôle constituant les languettes (10;27).

8. Liaison entre deux câbles métalliques (5,6;24,25) ou tronçons de câbles métalliques qui se croisent au moyen d'un serre-fil en croix (1;17) selon l'une des revendications 1 à 7.

9. Filet en câble métallique, notamment filet contre la chute des pierres, caractérisé en ce qu'au moins une partie des croisements de deux câbles métalliques (5,6;24,25) ou de tronçons de câbles métalliques, respectivement, du filet de câble métallique est pourvue d'un serre-fil en croix (1;17) selon l'une des revendications 1 à 7.

Fig. 1

Fig. 5

Fig. 2

Fig. 6

Fig. 3

Fig. 7

Fig. 4

Fig. 8